# FASCICULE DE BREVET EUROPEEN

(11) **EP 3 048 789 B1**
(45) Date de publication et mention de la délivrance du brevet: **28.12.2016**
(21) Numéro de dépôt: 16152385.7
(22) Date de dépôt: 22.01.2016
(51) Int. Cl.: H04N 5/232, H04N 5/347, H04N 5/345, A63H 27/00, A63H 30/04, B64C 39/02

(54) **DRONE MUNI D'UNE CAMÉRA VIDEO ET DE MOYENS DE COMPENSATION DES ARTEFACTS PRODUITS AUX ANGLES DE ROULIS LES PLUS IMPORTANTS**
DROHNE, DIE MIT EINER VIDEOKAMERA UND MITTELN ZUR KOMPENSATION VON BILDARTEFAKTEN AUSGESTATTET IST, DIE IN DEN WICHTIGSTEN WANKWINKELBEREICHEN PRODUZIERT WERDEN
DRONE PROVIDED WITH A VIDEO CAMERA AND MEANS TO COMPENSATE FOR THE ARTEFACTS PRODUCED AT THE GREATEST ROLL ANGLES

(30) Priorité: 26.01.2015 FR 1550568
(43) Date de publication de la demande: 27.07.2016
(73) Titulaire: Parrot Drones, 75010 Paris (FR)
(72) Inventeur: ELINE, Pierre, 95400 Arnouville Les Gonesse (FR)
(74) Mandataire: Dupuis-Latour, Dominique

(56) Documents cités:
- EP-A1- 2 031 864
- EP-A1- 2 613 214
- US-A1- 2011 128 350
- Anonymous: "The New Parrot Bebop Drone: Built for Stabilized Aerial Video | explora", , 6 octobre 2014 (2014-10-06), XP055233862, Extrait de l'Internet: URL:https://web.archive.org/web/2014100621 4813/http://www.bhphotovideo.com/explora/v ideo/news/new-parrot-bebop-drone-built-sta bilized-aerial-video [extrait le 2015-12-04]
- GURTNER A ET AL: "Investigation of Fish-Eye Lenses for Small-UAV Aerial Photography", IEEE TRANSACTIONS ON GEOSCIENCE AND REMOTE SENSING, IEEE SERVICE CENTER, PISCATAWAY, NJ, US, vol. 47, no. 3, 1 mars 2009 (2009-03-01), pages 709-721, XP011250695, ISSN: 0196-2892

## Description

L'invention concerne le traitement des images numériques captées par une caméra embarquée dans un appareil mobile, en particulier dans un engin volant motorisé tel qu'un drone.

L'invention s'applique avantageusement aux images recueillies par la caméra frontale d'un drone à voilure tournante tel qu'un quadricoptère.

L'*AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre), d'une caméra frontale captant une image de la scène vers laquelle est dirigé le drone et d'une caméra de visée verticale captant une image du terrain survolé. Ils sont pourvus de rotors multiples entrainés par des moteurs respectifs commandables de manière différenciée afin de piloter le drone en attitude et en vitesse. Divers aspects de ces drones sont décrits notamment dans les WO 2010/061099 A2, EP 2 364 757 A1, EP 2 613 213 A1 ou encore EP 2 613 214 A1 (Parrot SA).

Un article publié sur Internet de Timothy McDougal intitulé "The New Parrot Bebop Drone: Built for Stabilized Aerial Video" daté du 06.10.2014 (XP055233862) décrit en particulier l'appareil *Bebop Drone* précité, qui est un drone muni d'un objectif *fisheye* associé à un système de stabilisation et de contrôle de l'image.

La caméra video frontale est utilisable pour un pilotage "en mode immersif", c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts provoqués par le comportement du drone, qui peut induire des oscillations, déformations et autres artefacts intempestifs sur l'image captée par la caméra. L'apparition de ces artefacts est toutefois inhérente au mode d'évolution du drone, car tout déplacement linéaire du drone vers l'avant, vers l'arrière ou sur le côté implique un basculement du drone, et donc un effet correspondant, indésirable, de décalage, de rotation, d'oscillation... de l'image recueillie par la caméra.

Ces défauts sont tolérables dans une configuration de "pilotage immersif". En revanche, s'il s'agit d'utiliser le drone à la manière d'une caméra video mobile pour capter des séquences qui seront enregistrées et restituées ultérieurement, ces défauts sont extrêmement gênants, de sorte qu'il est souhaitable de les réduire à un minimum.

Dans le cas du *Bebop Drone* précité, celui-ci met en oeuvre une caméra munie d'un objectif à champ hémisphérique de type *fisheye* couvrant un champ d'environ 180°, mais dont seule une partie du champ capté est utilisée, cette partie correspondant à peu près au secteur angulaire capté par une caméra conventionnelle.

Pour ce faire, une fenêtre particulière (ci-après "zone image") est sélectionnée dans l'image brute délivrée en sortie du capteur (ci-après "zone de capture", qui est elle-même une portion de l'image hémisphérique globale formée à la surface du capteur). De façon caractéristique, cette fenêtre est une fenêtre mobile en rotation et en translation, déplacée en permanence en fonction des mouvements du drone déterminés par la centrale inertielle, et en sens contraire du déplacement détecté. L'image recueillie par l'objectif *fisheye* subit certes les mêmes mouvements d'oscillation et de rotation qu'une caméra conventionnelle, mais le déplacement de la zone image est asservi de manière à compenser ces mouvements et produire ainsi une image stabilisée à l'égard des mouvements du drone.

On définit ainsi une "caméra virtuelle" en extrayant de la scène capturée (la zone de capture) une zone particulière (la zone image) qui est dynamiquement déplacée, en rotation et en translation, dans la zone de capture en sens inverse des mouvements du drone afin d'annihiler les oscillations qui sinon seraient observées sur l'image.

Cette technique est décrite dans le EP 2 933 775 A1 (Parrot).

La présente invention vise l'élimination d'un défaut particulier qui apparait lors de certaines évolutions du drone, lorsque celui-ci est fortement incliné sur le côté.

Cette situation se produit notamment lors des translations brusques du drone vers la droite ou vers la gauche, ou lors de virages très serrés : ces mouvements sont créés par, notamment, des pivotements autour de l'axe de roulis du drone, pivotements qui se traduisent dans l'image par des rotations dans un sens ou dans l'autre de la scène captée par la caméra. Ces rotations peuvent être compensées par une rotation en sens inverse de la zone image dans la zone de capture. Mais il apparait toutefois que, lorsque les angles d'inclinaison du drone sont importants, il n'existe pas de position de la zone image qui permette de générer complètement une vue rectifiée. En effet, si la rotation de la zone image est trop importante, des coins ou bords opposés de cette zone image vont "déborder" de la zone de capture définie dans l'image hémisphérique, ce qui se traduira par l'apparition fugitive de coins ou bords gris sur l'image redressée délivrée en sortie du module de correction. Ces zones grises disparaitront certes lorsque le drone retrouvera une attitude moins inclinée, mais un artefact gênant aura été introduit et restera visible sur une séquence d'images destinée à être enregistrée et reproduite ultérieurement.

Cette situation se produit également lorsque l'utilisateur tient à la main le drone avec les moteurs arrêtés, et utilise celui-ci à la manière d'une caméra conventionnelle pour filmer une scène en bénéficiant de la stabilisation dynamique du système : s'il incline le drone au-delà d'un certain seuil, des zones avec des pixels manquants apparaissent aux frontières de l'image, alors même que le système de stabilisation donne l'illusion que la caméra n'a pas été inclinée.

Le point de départ de l'invention consiste, essentiellement, à prévoir plusieurs configurations de fonctionnement du capteur, et à sélectionner dynamiquement la configuration la mieux adaptée en fonction de l'angle d'inclinaison du drone, de manière à éviter, lors du traitement de correction de l'inclinaison, tout débordement de la zone image au-delà de la région du capteur initialement sélectionnée pour produire l'image.

Par "configuration de fonctionnement", on entendra un ensemble de paramètres de capture de la caméra, incluant :
- la résolution de sortie, c'est-à-dire la taille exprimée en pixels de l'image transmise en sortie par la caméra (zone image) ;
- la résolution de capture, c'est-à-dire la taille exprimée en pixels de la région acquise sur la surface du capteur (zone de capture) ; et
- le mode de capture, c'est-à-dire le traitement permettant de passer de la résolution de capture à la résolution de sortie.

Le mode de capture inclut notamment les modes dits "normal" (où tous les pixels acquis sont transmis tels quels en sortie, la résolution de sortie et la résolution de capture étant identiques), *"binning"* (où les pixels acquis sont regroupés en macropixels délivrés en sortie), et *"scaling"* (où les pixels sont fusionnés avec application d'un filtrage prenant en compte pour chaque pixel ses voisins sur l'image). Les techniques de *binning* et de *scaling* permettent notamment, par rapport au mode normal, de produire une image à partir d'une surface capturée plus grande, mais au prix d'une perte de définition.

Habituellement, ces paramètres de capture sont fixés lors de l'initialisation de la caméra. Concrètement, avec une configuration correspondant à celle du *Bebop Drone* précité, il est possible en mode normal de compenser des angles de roulis de ± 15° sans introduire de zones dépourvues de pixels.

Le problème de l'invention est d'augmenter le domaine de stabilisation au-delà de cette plage sans perte de pixels (c'est-à-dire sans apparition de bords ou coins gris) et sans dégradation de la fluidité du flux video (c'est-à-dire à *framerate* constant).

Pour ce faire, l'invention propose essentiellement d'utiliser plusieurs configurations de fonctionnement du capteur et de sélectionner dynamiquement en cours de prise de vue, en fonction de l'angle de roulis du drone, la configuration la mieux adaptée pour générer une vue rectifiée complète avec une qualité d'image optimale.

Le principe consiste à jouer par exemple sur différents modes du capteur (normal-*binning-scaling*) de manière à agrandir temporairement (par exemple en passant du mode normal à un mode *binning* ou *scaling*) la surface de capture lorsque le drone est fortement incliné. Cette modification se fera certes au prix d'une dégradation transitoire de la qualité (du fait de la mise en oeuvre du mode *binning* ou *scaling*) mais sans introduction d'artefact (bords ou coins gris) et sans modification du *framerate,* donc sans dégradation de la fluidité du flux video.

Plus précisément, l'invention propose un engin volant motorisé muni d'un système de stabilisation des images captées comprenant, de manière en elle-même connue et décrite notamment dans l'article précité de McDougal :
- une caméra liée au corps du drone, ladite caméra comprenant :
   un objectif à champ hémisphérique de type *fisheye,* et
   un capteur numérique recueillant l'image formée par l'objectif, où seule une partie, située à l'intérieur d'une zone de capture, des pixels de l'image formée sur le capteur est capturée pour délivrer des données de pixel brutes ;
- une centrale inertielle, apte à mesurer les angles d'Euler décrivant l'attitude instantanée du drone par rapport à un repère terrestre absolu ;
- un module extracteur, recevant en entrée lesdites données de pixel brutes de ladite zone de capture et délivrant en sortie des données de pixel d'une zone image de taille réduite définie à l'intérieur de la zone de capture et correspondant à un secteur angulaire capté par une caméra conventionnelle ; et
- un module d'asservissement, recevant en entrée des valeurs d'angles délivrées par la centrale inertielle, et apte à modifier dynamiquement la position et l'orientation de la zone image à l'intérieur de la zone de capture, dans un sens contraire de celui des changements des valeurs des angles mesurés par la centrale inertielle.

De façon caractéristique de l'invention :
- le capteur est un capteur pouvant opérer selon une pluralité de configurations de fonctionnement différentes, sélectionnables dynamiquement au cours d'une même séquence de prise de vue de la caméra, lesdites configurations de fonctionnement comprenant :
   - une configuration de base utilisant une zone de capture de base comme zone de capture, et
   - au moins une configuration en mode dégradé utilisant comme zone de capture une zone de capture étendue de dimension supérieure à la zone de capture de base, avec application aux pixels de la zone de capture étendue d'un traitement de conversion apte à réduire les dimensions de la zone de capture étendue à celles de la zone de capture de base, et
- il est prévu en outre un module compensateur, recevant en entrée des valeurs successives d'angle de roulis du drone délivrées par la centrale inertielle, et apte à modifier dynamiquement la configuration de fonctionnement courante du capteur de telle façon que le capteur opère :
   - selon la configuration de base pour des valeurs d'angle de roulis inférieures à une première limite, et
   - selon une configuration en mode dégradé pour des valeurs d'angle de roulis supérieures à une seconde limite.

De préférence, les moyens compensateurs d'effet de roulis sont aptes à modifier dynamiquement la configuration de fonctionnement courante du capteur : de la configuration de base vers la configuration en mode dégradé lorsque la valeur de l'angle de roulis augmente au-delà d'un premier seuil prédéterminé, et de la configuration en mode dégradé vers la configuration de base lorsque l'angle de roulis du drone diminue au-dessous d'un second seuil prédéterminé, le second seuil étant différent du premier seuil et inférieur à celui-ci.

Les configurations de fonctionnement peuvent notamment comprendre :
- la configuration de base, utilisant la zone de capture de base comme zone de capture,
- une configuration en mode moyennement dégradé utilisant comme zone de capture une première zone de capture étendue de dimension supérieure à la zone de capture de base, avec application aux pixels de la première zone de capture étendue d'un premier traitement de conversion apte à réduire les dimensions de la première zone de capture étendue à celles de la zone de capture de base, et
- une configuration en mode fortement dégradé utilisant comme zone de capture une seconde zone de capture étendue de dimension supérieure à la première zone de capture étendue, avec application aux pixels de la seconde zone de capture étendue d'un second traitement de conversion, différent du premier traitement, apte à réduire les dimensions de la seconde zone de capture étendue à celles de la zone de capture de base.

Le module compensateur modifie alors dynamiquement la configuration de fonctionnement courante du capteur de telle façon que le capteur opère : selon la configuration de base pour des valeurs d'angle de roulis inférieures à la première limite, selon la configuration en mode moyennement dégradé pour des valeurs d'angle de roulis supérieures à la seconde limite et inférieures à une troisième limite, et selon la configuration en mode fortement dégradé pour des valeurs d'angle de roulis supérieures à la troisième limite. ◊

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue d'ensemble montrant le drone et l'appareil de télécommande associé permettant son pilotage à distance.
Les Figures 2a et 2b illustrent les modifications des directions de visée de la caméra entraînées par un basculement vers l'avant du drone, par exemple lors d'une phase d'accélération.
La Figure 3 est un exemple d'image formée sur le capteur de la caméra du drone, illustrant les étapes successives (a) à (d) de fenêtrage et de correction des distorsions appliquées à cette image de manière à produire une image redressée.
Les Figures 4a et 4b illustrent le phénomène apparaissant lorsque l'angle de roulis du drone est important et qu'il n'existe pas de position de la fenêtre de capture permettant de générer une vue rectifiée complète.
La Figure 5 illustre sous forme de schéma par blocs les différents éléments permettant d'effectuer, selon l'invention, la sélection dynamique des configurations de fonctionnement du capteur.
La Figure 6 est une représentation schématique illustrant la sélection entre deux configurations différentes possibles en fonction de l'angle de roulis du drone.
La Figure 7 est une représentation schématique illustrant la sélection entre trois configurations différentes possibles en fonction de l'angle de roulis du drone.
Les Figures 8a à 8e sont des vues explicitant les étapes successives de modification de la configuration de fonctionnement du capteur, pour un exemple de mouvement d'oscillation en roulis du drone à partir de l'horizontale et avec retour à l'attitude originelle.
◊

On va maintenant décrire un exemple de mise en oeuvre de l'invention.

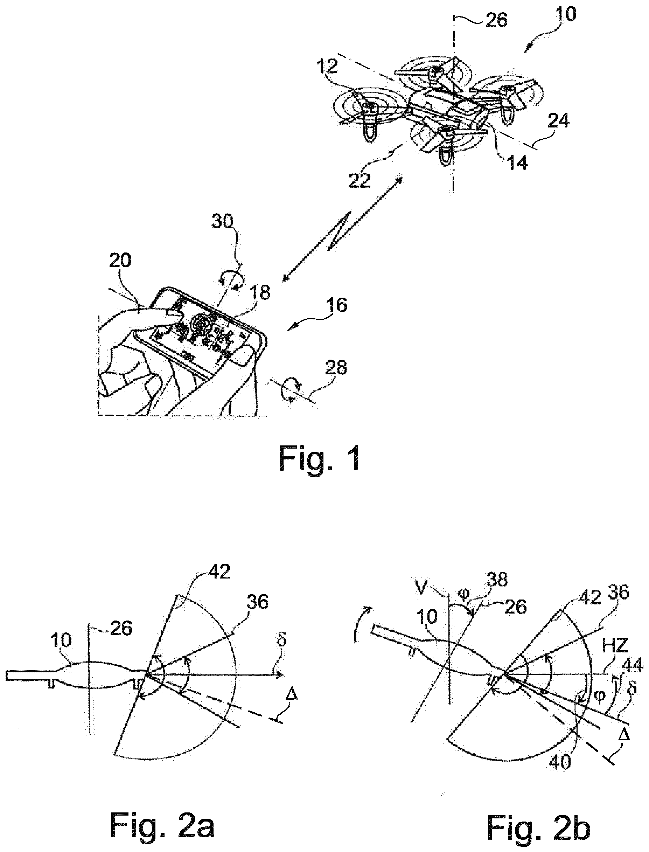

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle est orienté le drone.

Le drone comporte également une caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage ϕ, roulis θ et lacet ψ) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14, et de l'appareil 16 vers le drone 10 pour l'envoi de commandes de pilotage.

L'appareil de télécommande 16 est également pourvu de capteurs d'inclinaison permettant de contrôler l'attitude du drone en imprimant à l'appareil des inclinaisons correspondantes selon des axes de roulis et de tangage, étant entendu que les deux composantes longitudinale et transversale de la vitesse horizontale du drone 10 seront intimement liées à l'inclinaison suivant les deux axes respectifs de tangage et de roulis. Le pilotage du drone consiste à faire évoluer celui-ci par :
a) rotation autour d'un axe de tangage 22, pour le faire avancer ou reculer ;
b) rotation autour d'un axe de roulis 24, pour le décaler vers la droite ou vers la gauche ;
c) rotation autour d'un axe de lacet 26, pour faire pivoter vers la droite ou vers la gauche l'axe principal du drone ; et
d) translation vers le bas ou vers le haut par changement du régime des gaz, de manière à respectivement réduire ou augmenter l'altitude du drone.

Lorsque ces commandes de pilotage sont appliquées par l'utilisateur à partir de l'appareil de télécommande 16, les commandes a) et b) de pivotement autour des axes de tangage 22 et de roulis 24 sont obtenues par des inclinaisons de l'appareil 16 respectivement autour de son axe longitudinal 28 et de son axe transversal 30 : par exemple, pour faire avancer le drone il suffit d'incliner l'appareil de télécommande 16 vers l'avant en le penchant autour de l'axe 28, pour le déporter à droite il suffit d'incliner l'appareil de télécommande 16 en le penchant autour de l'axe 30 vers la droite, etc. Les commandes c) et d), quant à elles, résultent d'actions appliquées par contact du doigt 20 de l'utilisateur sur des zones spécifiques correspondantes de l'écran tactile 18.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone.

La Figure 2a illustre schématiquement, de profil, l'attitude du drone lorsque celui-ci est immobile, dans un état de sustentation.

On a schématisé en 36 le champ couvert par une caméra frontale 14 de type conventionnel, par exemple une caméra couvrant un champ de 54° et dont l'axe de vision δ est centré sur l'horizon.

Si, comme illustré Figure 2b, le drone progresse vers l'avant avec une vitesse horizontale non nulle, par conception l'axe 26 du drone sera incliné vers l'avant d'un angle ϕ (angle de tangage) par rapport à la verticale V. Cette inclinaison vers l'avant, schématisée par la flèche 38, implique une inclinaison de même valeur, schématisée par la flèche 40, de l'axe δ de la caméra par rapport au plan de l'horizon HZ. On comprend ainsi qu'au fil des évolutions du drone, de ses accélérations, ralentissements, etc. l'axe δ oscille en permanence autour de la direction de l'horizon HZ, ce qui se traduira sur l'image par des mouvements d'oscillation permanents vers le haut et vers le bas.

De façon comparable, si le drone se décale vers la droite ou vers la gauche, ce mouvement s'accompagnera d'un pivotement autour de l'axe de roulis 24, qui se traduira sur l'image par des rotations dans un sens ou dans l'autre de la scène captée par la caméra.

Pour pallier cet inconvénient il a été proposé, comme cela est exposé dans le EP 2 933 775 A1 précité, de munir la caméra d'un objectif à champ hémisphérique de type *fisheye* couvrant un champ d'environ 180°, schématisé en 42 sur la Figure 2a. L'image captée par la caméra munie de cet objectif *fisheye* subira certes les mêmes mouvements d'oscillation et de rotation qu'une caméra conventionnelle mais on n'utilisera qu'une partie du champ capté par cette caméra en sélectionnant une fenêtre particulière, ci-après "zone image", correspondant au secteur angulaire 36 capté par une caméra conventionnelle, et qui sera dynamiquement déplacée dans l'image hémisphérique en sens inverse des mouvements du drone tels que déterminés par la centrale inertielle, afin d'annihiler les oscillations qui sinon seraient observées sur l'image.

Ainsi, dans le cas illustré Figure 2b où le drone plonge vers le bas d'un angle de tangage ϕ (flèche 38) par rapport à la verticale V, la fenêtre de capture sera déplacée vers le haut (flèche 44) d'un angle de même valeur, ramenant ainsi dans la direction de l'horizon HZ l'axe central du secteur 36 d'une "caméra virtuelle" couvrant le champ correspondant à la zone image.

Comme on l'a illustré sur les figures, dans la mesure où les mouvements du drone vers l'avant sont plus fréquents que ceux vers l'arrière et que, d'autre part, les zones d'intérêt (terrain survolé) sont plutôt situées au-dessous du niveau du drone qu'au-dessus de celui-ci, il peut être avantageux d'incliner vers le bas l'axe principal Δ de l'objectif *fisheye* (par exemple d'un angle de site de -20°), de manière à couvrir un plus grand nombre de configurations d'évolution du drone et de faire en sorte que le secteur 36 correspondant à la zone de capture de la "caméra virtuelle" reste toujours dans le champ 42 de l'objectif *fisheye.*

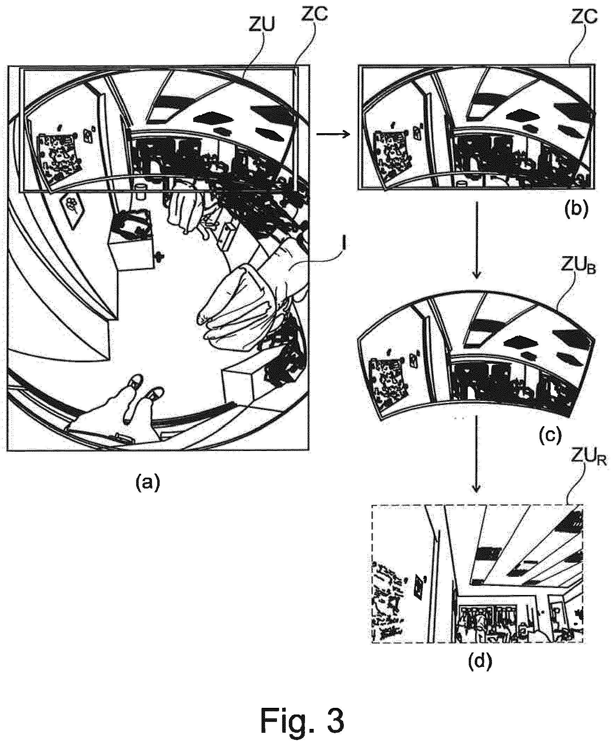

La Figure 3 montre en (a) un exemple de scène, telle que détectée sur le capteur de la caméra video munie de l'objectif *fisheye.*

Comme on peut le constater, l'image I de cette scène comporte de très fortes distorsions géométriques, inhérentes à la couverture hémisphérique ou quasi-hémisphérique de l'objectif *fisheye* redressée sur la surface plane du capteur.

Seule une partie de l'image I produite par l'objectif *fisheye* est utilisée. Cette partie est déterminée en fonction i) de la direction dans laquelle est pointée la "caméra virtuelle", ii) du champ de vision de celle-ci (schématisé en 36 sur les Figures 2a et 2b) et iii) de son ratio largeur/hauteur. On définit ainsi une "zone de capture" ZC contenant des données de pixel brutes incluant la "zone utile" ZU correspondant au champ de la caméra virtuelle après compensation des distorsions géométriques introduites par l'objectif *fisheye.*

On notera qu'il n'est pas utile de capturer la totalité des pixels de l'image I formée sur le capteur, mais seulement une fraction de ceux-ci, correspondant à la zone de capture ZC. Ainsi, si l'on souhaite obtenir par exemple une image en qualité HD (1920 x 1080 pixels, soit 2 Mpixel pour la zone utile ZU), il est nécessaire de disposer au départ d'une image *fisheye* de très haute résolution pour pouvoir en extraire une vue HD de bonne qualité quelle que soit la direction dans laquelle pointe la caméra virtuelle, ce qui implique de disposer d'un capteur dont la résolution sera typiquement de 14 Mpixel (4608 x 3288 pixels). Dans ces conditions, si l'on transférait la totalité de l'image I pour traitement, ceci correspondrait à un flux de données de pixel de 14 Mpixel pour chaque image, conduisant à une cadence d'images (*framerate*) de l'ordre de 6 images par seconde (ips) à cette résolution, ce qui serait insuffisant pour une séquence video fluide (imposant un *framerate* proche de 30 ips). On ne transfère donc que les données de pixel de la zone de capture ZC réellement nécessaire, par exemple une fenêtre de capture ZC d'environ 2 Mpixel, qui peut alors être rafraichie à une cadence de 30 ips sans difficulté particulière. On peut ainsi choisir un capteur de haute résolution tout en conservant un débit d'images élevé.

Les vues (a)-(d) de la Figure 3 illustrent les différents traitements opérés sur les données de pixel de la zone de capture ZC pour parvenir à l'image finale compensée des distorsions géométriques.

À partir des données de pixel transférées de la zone de capture ZC (vue(b)) le processus extrait les données de pixel de la zone utile brute ZU_{B} (vue(c)) et leur applique un maillage de triangles (technique en elle-même connue), qui permettra de redresser l'image par étirement de chaque triangle pour donner une image utile redressée ZU_{R} (vue (d)) avec des données de pixel rectifiées. En particulier, les lignes horizontales fortement courbées de l'image *fisheye* seront corrigées pour les rendre rectilignes et produire une image correspondant à une vision naturelle, dépourvue de distorsions géométriques.

La présente invention vise à remédier à un inconvénient particulier qui apparait lors de l'extraction de la zone image ZI à partir de la zone de capture ZC, lorsque l'angle de roulis du drone (rotation autour de l'axe longitudinal 24) est important, typiquement lorsqu'il dépasse des valeurs de l'ordre de 15°. Ceci peut se produire notamment lors de translation latérale brusque vers la droite ou vers la gauche du drone, ou de virage très serré dans un sens ou dans l'autre (l'inclinaison selon un angle de roulis se combinant alors avec une inclinaison selon l'angle de tangage, cette dernière étant d'autant plus élevée que la vitesse horizontale du drone est importante).

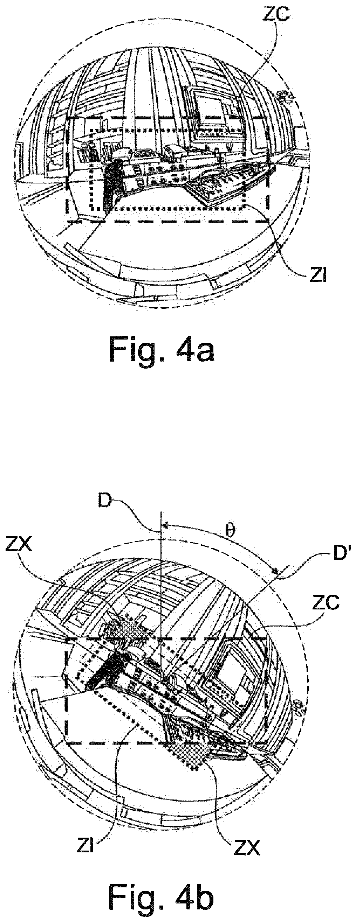

Ce phénomène est illustré Figures 4a et 4b : lorsque l'assiette du drone est horizontale (attitude correspondant à un vol stationnaire), l'image recueillie à la surface du capteur est celle illustrée Figure 4a, avec une zone de capture ZC rectangulaire centrée sur l'image hémisphérique produite par l'objectif *fisheye,* et une zone image ZI rectangulaire de dimension plus réduite, située à l'intérieur de la zone de capture ZC et centrée de la même façon.

Dans le cas d'un changement d'attitude du drone avec rotation du drone à gauche ou à droite autour de son axe de roulis, par exemple une rotation vers la droite d'un angle θ comme illustré Figure 4b, l'image formée sur le capteur subit une rotation correspondante.

Mais pour des valeurs d'angle de roulis dépassant un certain seuil, la zone image ZI ne pourra plus être complètement inscrite à l'intérieur de la zone de capture ZC, et deux coins opposés ZX de cette zone image ZI déborderont de la zone de capture ZC. Dans ces zones ZX aucune donnée de pixel ne sera délivrée (puisque les pixels du capteur qui seront extraits et délivrés en sortie de la caméra sont restreints à la zone de capture ZC), ce qui se traduira sur l'image finale par deux zones grises dans deux coins opposés correspondants. Même si ces zones grises n'apparaissent que de façon très fugitive lors de l'évolution du drone, elles constituent toutefois un artefact gênant, qui restera visible sur la séquence d'images destinée à être enregistrée et reproduite ultérieurement.

Le même phénomène apparait si le drone est simplement utilisé à l'arrêt et tenu à la main pour être utilisé comme une simple caméra : si le drone (la caméra) est trop incliné autour de son axe longitudinal, l'artefact des zones grises ZX sera présent aussi longtemps que durera cette inclinaison excessive.

Pour pallier cet inconvénient, l'invention propose de basculer dynamiquement entre différentes configurations de fonctionnement du capteur.

Par "configuration de fonctionnement" on entendra, comme indiqué en introduction, un ensemble de paramètres de capture de la caméra incluant :
- la résolution de sortie, c'est-à-dire la taille exprimée en pixels de l'image transmise en sortie par la caméra (zone image ZI) ;
- la résolution de capture, c'est-à-dire la taille exprimée en pixels de la région acquise sur la surface du capteur (zone de capture ZC) ; et
- le mode de capture, c'est-à-dire le traitement permettant de passer de la résolution de capture à la résolution de sortie.

Pour ce dernier paramètre, les caméras numériques proposent généralement plusieurs modes d'acquisition des données video dont les plus courants sont :
- le mode "normal", dans lequel tous les pixels acquis au sein d'une fenêtre donnée sont transmis tels quels en sortie du capteur. La résolution de capture est donc identique à la résolution de sortie et la qualité de l'image est maximale ;
- le mode dit "*binning*", dans lequel des pixels voisins sont électriquement regroupés pour former des macropixels, et ce sont ces macropixels qui sont délivrés en sortie comme données de pixels. Il devient ainsi possible dans un temps d'acquisition comparable (donc sans incidence sur la fluidité de la séquence video) de capturer une surface plus grande, mais au prix d'une perte importante de définition, d'au moins 50 %. En effet, les pixels sont regroupés au moins deux par deux horizontalement et/ou verticalement pour former le macropixel par moyennage des pixels individuels ;
- le mode dit "*scaling*", qui permet d'ajuster plus finement le niveau de réduction que le mode *binning.* En effet, alors que le *binning* est limité à des ratios de type 2ⁿ puisqu'il agit en regroupant les pixels, le *scaling* opère une réduction logicielle avec filtrage de chaque pixel individuel en fonction de la valeur des pixels voisins. On peut ainsi réaliser des réductions selon un facteur 3/4, 2/3, etc., avec une image produite de meilleure qualité qu'en mode *binning.* En revanche, ce mode est plus lent car pour réduire l'image des calculs importants sont nécessaires, et tous les pixels de la surface captée doivent être acquis pour effectuer le filtrage.

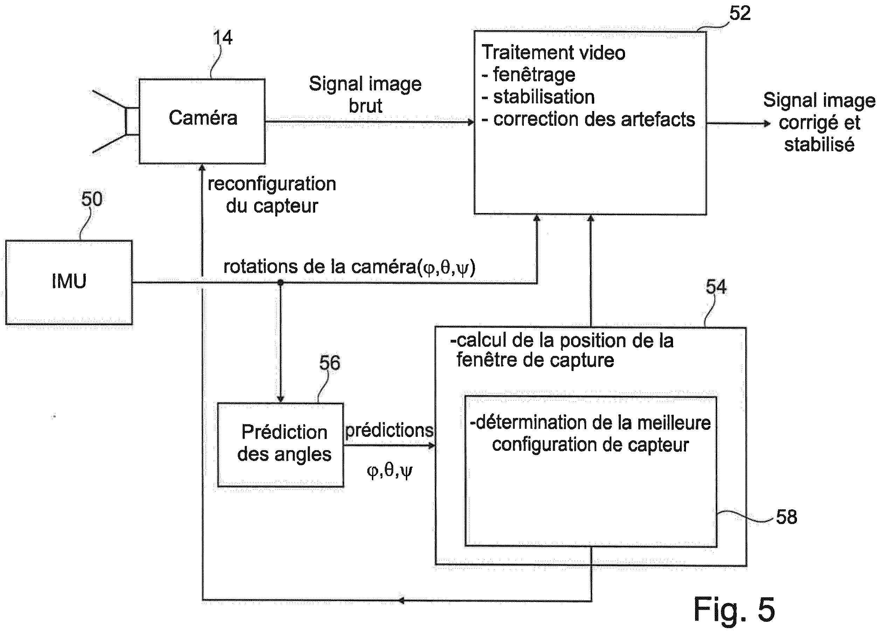

La Figure 5 illustre, sous forme de schéma par blocs, les différents éléments d'un circuit de traitement d'image permettant de contrôler, selon l'invention, la commutation dynamique des configurations de fonctionnement.

La caméra 14 du drone est sujette à des déplacements angulaires. Ces déplacements sont mesurés par une centrale inertielle IMU 50 délivrant des signaux représentatifs des rotations instantanées du drone et donc de la caméra, la centrale inertielle 50 et la caméra 14 étant mécaniquement solidaires. Ces rotations sont données par les angles de tangage ϕ, de roulis θ et de lacet ψ qui décrivent l'inclinaison du drone dans les trois dimensions par rapport à un repère terrestre fixe (angles d'Euler).

Ces mesures des rotations sont appliquées à un module 52 de traitement video assurant le fenêtrage, la stabilisation d'image et la correction des artefacts du signal image brut délivré par la caméra 14. Le module 52 délivre en sortie un signal image corrigé et stabilisé qui pourra être ensuite transmis à l'utilisateur pour visualisation sur un écran distant, enregistrement dans une mémoire numérique, etc. Le fenêtrage réalisé par le module 52 est contrôlé par un module 54 assurant le calcul de la position de la fenêtre de capture ZC dans l'image hémisphérique formée sur le capteur numérique, à partir de prédictions des angles de rotation ϕ, θ et ψ délivrés par un module prédicteur 56 recevant en entrée les valeurs instantanées des rotations du drone délivrées par la centrale inertielle 50. Ces données sont délivrées à la fréquence d'acquisition des gyromètres, typiquement une fréquence de 990 Hz, très supérieure à la fréquence d'acquisition des images par la caméra video, typiquement une fréquence de 30 Hz.

De façon caractéristique de l'invention, le module 54 inclut également un module 58 de sélection de la meilleure configuration du capteur, en fonction de l'angle de roulis prédit par le module 56.

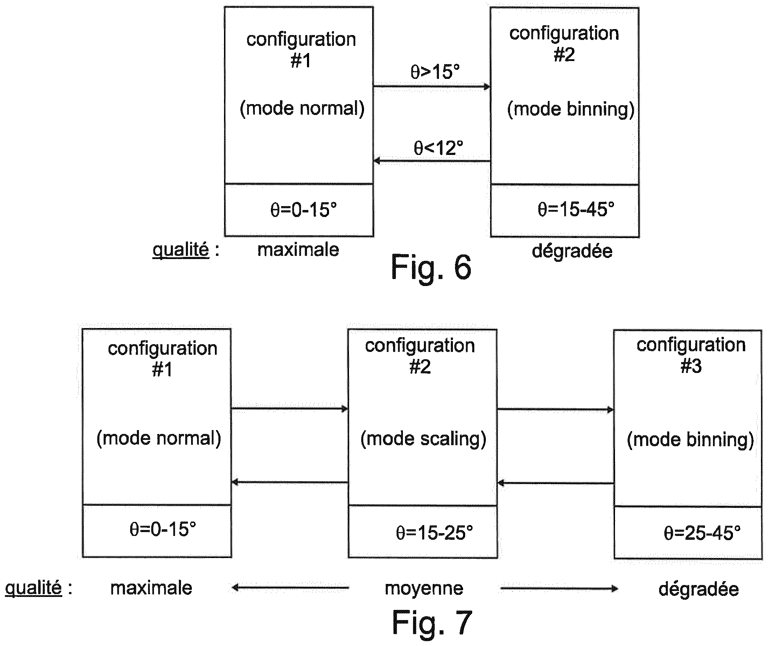

La Figure 6 illustre schématiquement la manière dont est opérée cette sélection en fonction de l'angle de roulis du drone, entre deux configurations différentes possibles, par exemple :
- une configuration "en mode normal", lorsque l'angle de roulis θ est inférieur à 15°. La configuration sélectionnée assure une qualité maximale, par exemple avec une résolution de sortie et de capture égale à 1408 x 2112 pixels ; et
- une configuration en mode dégradé, par exemple une configuration en mode "*binning* horizontal" si l'angle de roulis θ dépasse le seuil (par exemple un seuil de θ = 15°) qui ne permet pas de générer une zone image complète (comme cela a été exposé plus haut en référence aux Figures 4a et 4b). La configuration en mode dégradé prévoit par exemple une résolution de capture de 2816 x 2112 pixels pour aboutir à une résolution de sortie de 1408 x 2112 pixels.

Si le seuil est franchi, le module 58 envoie alors à la caméra 14 un signal de reconfiguration de capteur amenant celui-ci à fonctionner avec une qualité moindre, mais une zone de capture plus étendue. Cette configuration de qualité dégradée en mode *binning* est maintenue tant que l'angle de roulis θ dépasse le seuil précité. De préférence, pour éviter des phénomènes de commutations multiples aux alentours du seuil, il est prévu d'introduire une hystérésis, en ne déclenchant le retour à la configuration en mode normal que si l'angle de roulis descend par exemple en dessous de 12° (alors que le basculement inverse avait été commandé lorsque cet angle dépassait 15°).

La Figure 7 est homologue de la Figure 6, pour trois configurations différentes possibles, comprenant par exemple une configuration médiane en mode *scaling* avec une qualité modérément dégradée, intermédiaire entre la qualité maximale du mode normal et la qualité plus fortement dégradée du mode *binning.*

La commutation entre les trois modes est opérée de la même manière que précédemment, par exemple sur la base de plages d'angle de roulis 0-15° pour le mode normal, 15-25° pour le mode *scaling* et 25-45° pour le mode *binning,* avec dans chaque cas introduction d'une hystérésis à la commutation d'une configuration à l'autre.

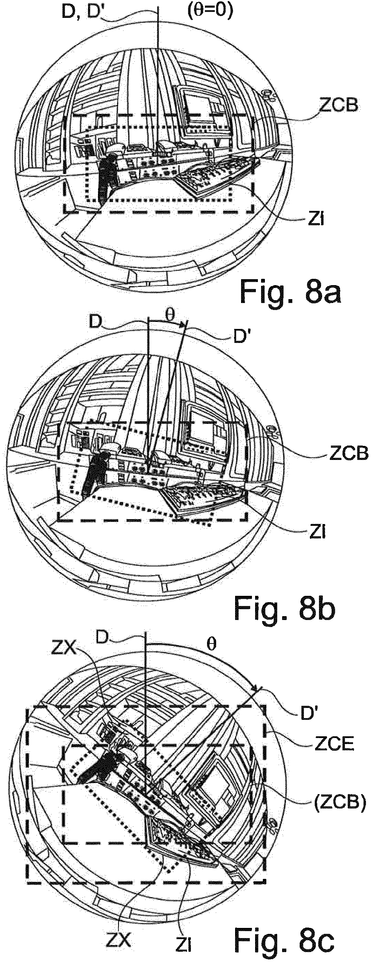

Les Figures 8a à 8e illustrent un exemple de commutation entre deux configurations différentes, maximale et dégradée, dans un scénario où le drone est d'abord à plat, se penche légèrement puis de manière plus prononcée, avant de revenir à plat.

Sur ces figures, la zone image ZI est indiquée en pointillés et la zone de capture en tiretés. Cette zone de capture peut être une zone de capture de base ZCB lorsque la caméra opère en mode normal, ou une zone de capture étendue ZCE lorsque la caméra opère en mode dégradé, par exemple en mode *binning* 2 x 2 avec une surface de capture étendue ZCE quatre fois plus étendue que la zone de capture de base ZCB. Initialement (Figure 8a) le drone est horizontal, ce qui correspond typiquement à une situation de vol stationnaire. L'angle de roulis θ est de 0° et les axes D de la zone de capture de base et B' de la zone image ZI sont confondus.

Lorsque le drone se penche légèrement, avec un angle de roulis θ inférieur à 15°, par exemple un angle de roulis θ = 12° (Figure 8b), la zone image ZI reste inscrite en totalité dans la zone de capture de base ZCB.

Lorsque le drone se penche de manière plus prononcée (Figure 8c), par exemple avec un angle de roulis θ = 30°, la zone de capture de base ZCB ne peut plus contenir la zone image ZI, qui en déborde dans les zones non capturées ZX. Le capteur bascule alors dans une configuration en basse définition (*binning* ou *scaling*) avec une zone de capture étendue ZCE qui pourra toujours contenir la zone image ZI même dans les configurations les plus extrêmes (jusqu'à θ = 45°).

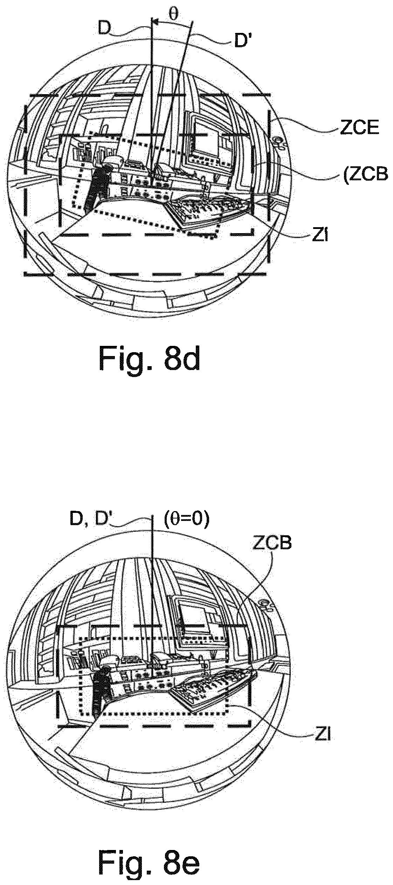

Lorsque le drone effectue la manoeuvre inverse, la configuration est conservée jusqu'à atteindre un angle de roulis de θ = 12° (Figure 8d). On notera que sur la Figure 8d l'inclinaison est la même que sur la Figure 8b, mais que la zone de capture reste la zone de capture étendue ZCE (effet d'hystérésis). En effet, si l'on revenait trop tôt au mode normal, la marge d'erreur serait trop faible pour être certain que la surface de la zone capture sera toujours suffisante pour contenir la zone image.

Ce n'est que lorsque cette marge d'erreur sera suffisamment importante (Figure 8e) que l'on pourra alors opérer le basculement inverse du capteur en mode normal, avec une qualité maximale.

On constate ainsi que dans tous les cas, même lorsque le roulis devient important, la vue stabilisée est toujours générée sans qu'aucun pixel ne manque à l'image. Lorsque le mode *binning* est utilisé (situation des Figures 8c et 8d), l'image deviendra certes légèrement plus floue, mais cette modification, très fugitive, sera presque imperceptible, beaucoup moins en tous cas qu'une perte de pixels qui se traduirait par des bandes ou coins gris dans l'image finale délivrée à l'utilisateur.

## Revendications

1. Un engin volant motorisé de type drone (10) muni d'un système de stabilisation des images captées, comprenant :
- une caméra (14) liée au corps du drone, ladite caméra comprenant :
• un objectif à champ hémisphérique de type *fisheye,* et
• un capteur numérique recueillant l'image formée par l'objectif, où les pixels de l'image formée sur le capteur , situés à l'intérieur d'une zone de capture (ZC), sont capturés pour délivrer des données de pixel brutes ;
- une centrale inertielle (50), apte à mesurer les angles d'Euler (ϕ, θ, ψ) décrivant l'attitude instantanée du drone par rapport à un repère terrestre absolu ;
- un module extracteur (52), recevant en entrée lesdites données de pixel brutes de ladite zone de capture (ZC) et délivrant en sortie des données de pixel d'une zone image (ZI) de taille réduite définie à l'intérieur de la zone de capture et correspondant à un secteur angulaire (36) capté par une caméra conventionnelle ; et
- un module d'asservissement (54, 56), recevant en entrée des valeurs d'angles délivrées par la centrale inertielle, et apte à modifier dynamiquement la position et l'orientation de la zone image à l'intérieur de la zone de capture, dans un sens contraire de celui des changements des valeurs des angles mesurés par la centrale inertielle, **caractérisé en ce que** :
- la zone de capture (ZC) a une dimension inférieure à celle de l'image formée par l'objectif sur le capteur;
- le capteur est un capteur pouvant opérer selon une pluralité de configurations de fonctionnement différentes, sélectionnables dynamiquement au cours d'une même séquence de prise de vue de la caméra, lesdites configurations de fonctionnement comprenant :
• une configuration de base utilisant une zone de capture de base (ZCB) comme zone de capture (ZC), et
• au moins une configuration en mode dégradé utilisant comme zone de capture (ZC) une zone de capture étendue (ZCE) de dimension supérieure à la zone de capture de base (ZCB), avec application aux pixels de la zone de capture étendue d'un traitement de conversion apte à réduire les dimensions de la zone de capture étendue à celles de la zone de capture de base, et
- il est prévu en outre un module compensateur (58), recevant en entrée des valeurs successives d'angle de roulis (θ) du drone délivrées par la centrale inertielle, et apte à modifier dynamiquement la configuration de fonctionnement courante du capteur de telle façon que le capteur opère :
• selon la configuration de base pour des valeurs d'angle de roulis (θ) inférieures à une première limite, et
• selon une configuration en mode dégradé pour des valeurs d'angle de roulis (θ) supérieures à une seconde limite.

2. Le drone de la revendication 1, dans lequel les moyens compensateurs d'effet de roulis sont aptes à modifier dynamiquement la configuration de fonctionnement courante du capteur :
de la configuration de base vers la configuration en mode dégradé lorsque la valeur de l'angle de roulis augmente au-delà d'un premier seuil prédéterminé,
et de la configuration en mode dégradé vers la configuration de base lorsque l'angle de roulis du drone diminue au-dessous d'un second seuil prédéterminé, le second seuil étant différent du premier seuil et inférieur à celui-ci.

3. Le drone de la revendication 1, dans lequel les configurations de fonctionnement comprennent :
• la configuration de base (Configuration #1), utilisant la zone de capture de base (ZCB) comme zone de capture (ZC),
• une configuration en mode moyennement dégradé (Configuration #2) utilisant comme zone de capture (ZC) une première zone de capture étendue de dimension supérieure à la zone de capture de base, avec application aux pixels de la première zone de capture étendue d'un premier traitement de conversion apte à réduire les dimensions de la première zone de capture étendue à celles de la zone de capture de base, et
• une configuration en mode fortement dégradé (Configuration #3) utilisant comme zone de capture (ZC) une seconde zone de capture étendue de dimension supérieure à la première zone de capture étendue, avec application aux pixels de la seconde zone de capture étendue d'un second traitement de conversion, différent du premier traitement, apte à réduire les dimensions de la seconde zone de capture étendue à celles de la zone de capture de base,
et dans lequel le module compensateur est en outre apte à modifier dynamiquement la configuration de fonctionnement courante du capteur de telle façon que le capteur opère :
s elon la configuration de base pour des valeurs d'angle de roulis inférieures à la première limite,
• selon la configuration en mode moyennement dégradé pour des valeurs d'angle de roulis supérieures à la seconde limite et inférieures à une troisième limite, et
• selon la configuration en mode fortement dégradé pour des valeurs d'angle de roulis supérieures à la troisième limite.

## Patentansprüche

1. Motorisiertes Fluggerät des Typs Drohne (10), das mit einem Stabilisierungssystem der erfassten Bilder versehen ist, das Folgendes umfasst:
- eine Kamera (14), die mit dem Körper der Drohne verbunden ist, wobei die Kamera Folgendes umfasst:
• ein Objektiv mit halbkugelförmigem Feld des Typs *Fisheye,* und
• einen digitalen Sensor, der das von dem Objektiv gebildete Bild aufnimmt, wobei die Pixel des Bilds, das auf dem Sensor gebildet wird, die im Inneren einer Erfassungszone (ZC) liegen, erfasst werden, um Pixelrohdaten zu liefern;
- eine Trägheitszentrale (50), die angepasst ist, um Eulerwinkel (ϕ, θ, Ψ) zu messen, die die Momenteinstellung der Drohne in Bezug zu einem absoluten terrestrischen Bezugspunkt beschreiben;
- ein Extraktionsmodul (52), das am Eingang die Pixelrohdaten der Erfassungszone (ZC) empfängt und am Ausgang Pixeldaten einer Bildzone (ZI) mit verringerter Größe, die im Inneren der Erfassungszone definiert ist und die einem Winkelsektor (36), der von einer herkömmlichen Kamera erfasst wird, entspricht, liefert; und
- ein Steuermodul (54, 56), das am Eingang Winkelwerte empfängt, die von der Trägheitszentrale geliefert werden, und geeignet ist, die Position und Ausrichtung der Bildzone in dem Inneren der Erfassungszone dynamisch in eine Richtung zu modifizieren, die der der Änderungen der Werte der von der Trägheitszentrale gemessenen Winkel entgegengesetzt ist,
**dadurch gekennzeichnet, dass**:
- die Erfassungszone (ZC) ein Maß hat, das kleiner ist als das des Bilds, das von dem Objektiv auf dem Sensor gebildet wird;
- der Sensor ein Sensor ist, der gemäß einer Mehrzahl unterschiedlicher Betriebskonfigurationen, die dynamisch im Laufe ein und derselben Bildaufnahmesequenz der Kamera auswählbar sind, arbeiten kann, wobei die Betriebskonfigurationen Folgendes umfassen:
• eine Basiskonfiguration, die eine Basiserfassungszone (ZCB) als eine Erfassungszone (ZC) verwendet, und
• mindestens eine Schadbetriebskonfiguration, die als Erfassungszone (ZC) eine erweiterte Erfassungszone (ZCE) mit Maß verwendet, das größer ist als die Basiserfassungszone (ZCB), mit Anwendung auf die Pixel der erweiterten Erfassungszone einer Umwandlungsverarbeitung, die geeignet ist, die Maße der erweiterten Erfassungszone auf die der Basiserfassungszone zu verringern, und
- wobei außerdem ein Kompensatormodul (58) vorgesehen ist, das am Eingang aufeinanderfolgende Wankwinkelwerte (θ) der Drohne empfängt, die von der Trägheitszentrale geliefert werden, und angepasst ist, um dynamisch die aktuelle Betriebskonfiguration des Sensors derart zu ändern, dass der Sensor:
• gemäß der Basiskonfiguration für Wankwinkelwerte (θ), die kleiner sind als ein erstes Limit, arbeitet, und
• gemäß einer Schadbetriebskonfiguration für Wankwinkelwerte (θ), die größer sind als ein zweites Limit, arbeitet.

2. Drohne nach Anspruch 1, wobei die Kompensationsmittel der Wankbewegung geeignet sind, um dynamisch die aktuelle Betriebskonfiguration des Sensors:
• von der Basiskonfiguration zu der Schadbetriebskonfiguration zu ändern, wenn der Wankwinkelwert über einen ersten vorbestimmten Schwellenwert steigt,
• und von der Schadbetriebskonfiguration zu der Basiskonfiguration, wenn der Wankwinkel der Drohne unter einen zweiten vorbestimmten Schwellenwert sinkt, wobei der zweite Schwellenwert von dem ersten Schwellenwert unterschiedlich und niedriger ist als dieser.

3. Drohne nach Anspruch 1, wobei die Betriebskonfigurationen Folgendes umfassen:
• die Basiskonfiguration (Konfiguration Nr. 1), die die Basiserfassungszone (ZCB) als Erfassungszone (ZC) verwendet,
• eine Konfiguration im mittelschweren Schadbetrieb (Konfiguration Nr. 2), die als Erfassungszone (ZC) eine erste erweiterte Erfassungszone mit größerem Maß als die Basiserfassungszone verwendet, mit Anwendung auf die Pixel der ersten erweiterten Erfassungszone einer ersten Umwandlungsverarbeitung, die geeignet ist, um die Maße der ersten erweiterten Erfassungszone auf diejenigen der Basiserfassungszone zu verringern, und
• eine Konfiguration im schweren Schadbetrieb (Konfiguration Nr. 3), die als Erfassungszone (ZC) eine zweite erweiterte Erfassungszone mit Maß größer als die erste erweiterte Erfassungszone verwendet, mit Anwendung auf die Pixel der zweiten erweiterten Erfassungszone einer zweiten Umwandlungsverarbeitung, die von der ersten Verarbeitung unterschiedlich ist, die geeignet ist, die Maße der zweiten erweiterten Erfassungszone auf die jenigen der Basiserfassungszone zu verringern,
und wobei das Kompensationsmodul außerdem geeignet ist, dynamisch die aktuelle Betriebskonfiguration des Sensors derart zu ändern, dass der Sensor wie folgt arbeitet:
• gemäß der Basiskonfiguration für Wankwinkelwerte, die kleiner sind als das erste Limit,
• gemäß der Konfiguration im mittelschweren Schadbetrieb für Wankwinkelwerte, die größer sind als das zweite Limit und kleiner sind das dritte Limit, und
• gemäß der Konfiguration im schweren Schadbetrieb für Wankwinkelwerte, die größer sind als das dritte Limit.

## Claims

1. A motorized flying machine of the drone type (10) provided with a system for stabilizing the captured images, comprising:
- a camera (14) connected to the drone body, said camera comprising:
• a hemispherical field lens of the fisheye type, and
• a digital sensor collecting the image formed by the lens, the pixels of the image formed on the sensor, located inside a capture area (ZC), being captured to deliver raw pixel data;
- a inertial unit (50), adapted to measure the Euler angles (ϕ*, θ,* ψ) describing the instantaneous attitude of the drone with respect to an absolute terrestrial system;
- an extractor module (52), receiving as an input said raw pixel data of said capture area (ZC) and delivering as an output pixel data of an image area (ZI) of reduced size defined inside the capture area and corresponding to an angular sector (36) captured by a conventional camera; and
- an automatic control module (54, 56), receiving as an input angle values delivered by the inertial unit, and adapted to dynamically modify the position and the orientation of the image area inside the capture area, in a direction opposite to that of the changes of the values of the angles measured by the inertial unit,
**characterized in that**:
- the capture area (ZC) has a size lower than that of the image formed by the lens of the sensor;
- the sensor is an sensor able to operate according to a plurality of different configurations of operation, which can be dynamically selected during a same image capture sequence of the camera, said configurations of operation comprising :
• a base configuration using a base capture area (ZCB) as a capture area (ZC), and
• at least one degraded mode configuration using as a capture area (ZC) an extended capture area (ZCE) of size higher than that of the base capture area (ZCB), with application to the pixels of the extended capture area of a conversion processing adapted to reduce the size of the extended capture area to that of the base capture area, and
- it is moreover provided a compensator module (58), receiving as an input successive values of roll angle (θ) of the drone, delivered by the inertial unit, and adapted to dynamically modify the current configuration of operation of the sensor in such a manner that the sensor operates :
• according to the base configuration for roll angle values (θ) lower than a first limit, and
• according to a degraded mode configuration for roll angle values (θ) higher than a second limit.

2. The drone of claim 1, wherein the roll effect compensator means are adapted to dynamically modify the current configuration of operation of the sensor:
• from the base configuration to the degraded mode configuration when the roll angle value increases beyond a first predetermined threshold, and
• from the degraded mode configuration to the base configuration when the roll angle of the drone decreases below a second predetermined threshold, the second threshold being different from the first threshold and lower than the latter.

3. The drone of claim 1, wherein the configurations of operation comprise:
• the base configuration (Configuration #1) using the base capture area (ZCB) as a capture area (ZC),
• a moderately degraded mode configuration (Configuration #2) using as a capture area (ZC) a first extended capture area of size higher than that of the base capture area, with application to the pixels of the first extended capture area of a first conversion processing adapted to reduce the size of the first extended capture area to that of the base capture area, and
• a strongly degraded mode configuration (Configuration #3) using as a capture area (ZC) a second extended capture area of size higher than that of the first extended capture area, with application to the pixels of the second extended capture area of a second conversion processing, different from the first processing, adapted to reduce the size of the second extended capture area to that of the base capture area,
and wherein the compensator module is further adapted to dynamically modify the current configuration of operation of the sensor in such a manner that the capture operates :
• according to the base configuration for roll angle values lower than the first limit,
• according to the moderately degraded configuration for roll angle values higher than the second limit and lower than a third limit, and
• according to the strongly degraded configuration for roll angle values higher than the third limit.
